# EUROPEAN PATENT APPLICATION

(11) **EP 4 826 958 A1**
(43) Date of publication of application: **21.10.2026**
(21) Application number: 24914867.7
(22) Date of filing: 02.09.2024
(51) Int. Cl.: H02J 50/90

(54) **ELECTRONIC DEVICE AND DISPLAY SCREEN CONTROL METHOD**

(30) Priority: 05.01.2024 CN 202410029299
(71) Applicant: Huawei Technologies Co., Ltd., Shenzhen, Guangdong 518129 (CN)
(72) Inventor: MO, Jiabao, Shenzhen, Guangdong 518129 (CN); ZHANG, Junyong, Shenzhen, Guangdong 518129 (CN); CHEN, Yuanjie, Shenzhen, Guangdong 518129 (CN); ZOU, Yang, Shenzhen, Guangdong 518129 (CN); LI, Weihuan, Shenzhen, Guangdong 518129 (CN)
(74) Representative: Gill Jennings & Every LLP
(86) International application number: PCT/CN2024/116397
(87) International publication number: WO 2025/145645

(57) **Abstract**

Embodiments of this application relate to the field of wireless power transfer technologies, and provide an electronic device and a display screen control method, to improve accuracy of determining a relative position of a wireless power transfer device relative to the electronic device. The electronic device includes a display screen and a processor. The display screen includes a touch driver chip and a plurality of spaced touch sensors. The touch sensor collects a transmit signal of a wireless power transfer power coil. The touch driver chip feeds back a collection result to the processor. The processor determines, based on the collection result of the display screen, whether a touch operation or the wireless power transfer power coil exists above the display screen. A power coil in the electronic device does not need to participate in detection of a position of the wireless power transfer power coil. When the wireless power transfer power coil is located outside an area in which the power coil of the electronic device may perform collection, the display screen may still detect the position of the wireless power transfer power coil. In this way, precision of determining a relative position of the wireless power transfer device relative to the electronic device is higher.

## Description

This application claims priority to Chinese Patent Application No. 202410029299.7, filed with the China National Intellectual Property Administration on January 5, 2024 and entitled "ELECTRONIC DEVICE AND DISPLAY SCREEN CONTROL METHOD", which is incorporated herein by reference in its entirety.

### TECHNICAL FIELD

This application relates to the field of wireless power transfer technologies, and in particular, to an electronic device and a display screen control method.

### BACKGROUND

Wireless power transfer (wireless power transfer, WPT) is a technology in which electric energy is transmitted by using a coupled electromagnetic field as a medium, to charge a to-be-charged device. Compared with conventional contact charging, the wireless power transfer has the following advantages: easy to use, no spark, no electric shock risk, no mechanical wear, adaptable to a plurality of severe environments and weather, automatic charging and mobile charging, and the like. Therefore, the wireless power transfer is widely applied.

Currently, in mainstream wireless power transfer, only after a connection is established between a first power coil in a wireless power transfer device and a second power coil in the to-be-charged device, an alignment status between the first power coil and the second power coil can be determined, and a prompt is provided. If no connection is established between the first power coil and the second power coil, the alignment status cannot be determined, and a subsequent operation cannot be performed. However, whether a connection can be established between the first power coil and the second power coil is affected by many factors such as a degree of alignment between the first power coil and the second power coil, and an environment. Consequently, often, a relative position of the first power coil relative to the second power coil can hardly be determined or is incorrectly determined.

### SUMMARY

Embodiments of this application provide an electronic device and a display screen control method, to improve accuracy of determining a relative position of a wireless power transfer device relative to a to-be-charged device.

To achieve the foregoing objective, the following technical solutions are used in this application.

According to a first aspect of embodiments of this application, an electronic device is provided, including a display screen and a processor. The display screen includes a touch driver chip and a plurality of spaced touch sensors; and when a wireless power transfer device approaches the display screen, the touch sensor is configured to: receive a transmit signal of a first power coil of the wireless power transfer device, and output a feedback signal. The touch driver chip is configured to: collect a feedback signal output by at least one touch sensor, and send the feedback signal to the processor. The feedback signal indicates a relative position of the first power coil relative to the display screen. The processor adjusts display and/or touch of the display screen in response to the feedback signal.

The electronic device provided in embodiments of this application identifies, based on a touch detection technology corresponding to the display screen, whether the first power coil is located above the display screen in a thickness direction and pixel positions of the first power coil on the display screen in a length direction and a width direction, to determine the relative position of the first power coil relative to the display screen (an absolute position of the first power coil). The processor adjusts display of the display screen in response to a feedback signal that represents position information, to give feedback on a detection result. Based on this, a second power coil in the electronic device does not need to participate in detection of a position of the first power coil. When the first power coil is located outside an area in which the second power coil may perform collection, the position of the first power coil may still be detected. Without being limited by a prerequisite that a handshake between the first power coil and the second power coil succeeds, or an active detection area of the second power coil, accuracy of determining a relative position of the wireless power transfer device relative to the electronic device is higher.

In a possible implementation, adjusting display of the display screen includes: adjusting a display status of the display screen, to reduce impact of the first power coil on display.

In a possible implementation, the electronic device further includes a display driver integrated circuit, and the display driver integrated circuit is coupled to the processor; and adjusting the display status of the display screen includes: controlling the display driver integrated circuit to increase display luminance of the display screen. In a highlight mode, a ripple is not easy to notice or disappears. Therefore, increasing the display luminance of the display screen can resolve a problem of display interference caused by the first power coil.

In a possible implementation, the electronic device further includes a display driver integrated circuit, and the display driver integrated circuit is coupled to the processor; and adjusting the display status of the display screen includes: controlling the display driver integrated circuit to drive the display screen to exit an always on display mode or not enter an always on display mode. In a low refresh rate display status, a ripple phenomenon of the display screen is clear. After a refresh rate of the display screen is increased, display effect of the display screen may be improved.

In a possible implementation, the electronic device further includes a display driver integrated circuit, and the display driver integrated circuit is coupled to the processor; and adjusting the display status of the display screen includes: controlling duration of a data write signal output by the display driver integrated circuit to the display screen to be greater than a specified value. Because the first power coil affects a potential of a gate electrode of a drive thin film transistor, effect of charging the gate electrode of the drive thin film transistor is affected. Prolonging the duration of the data write signal to prolong charging time increases stability of a capacitor C in a drive circuit, thereby reducing display interference.

In a possible implementation, the electronic device further includes a display driver integrated circuit, and the display driver integrated circuit is coupled to the processor; and adjusting the display status of the display screen includes: controlling a time period in which the display driver integrated circuit outputs a data write signal to the display screen to not intersect with a time period in which the first power coil transmits a signal. Enabling the time period in which the display driver integrated circuit outputs the data write signal to the display screen to not intersect with the time period in which the first power coil transmits a signal can avoid interference of the first power coil to effect of charging a gate electrode of a drive thin film transistor, thereby reducing display interference.

In a possible implementation, the processor adjusts the display status of the display screen when the relative position indicates that the first power coil is located within a specified distance on a light-emitting side of the display screen. When the first power coil is far away from the display screen, impact on display may be negligible, and the display status of the display screen may not need to be adjusted. A distance determining step is added. When the first power coil has small impact on display, the display status of the display screen may not need to be adjusted, thereby reducing power consumption.

In a possible implementation, adjusting display of the display screen includes: adjusting a display image of the display screen. Based on a detected actual position of the first power coil on the display screen, and a folded state and a screen status of the electronic device, a user is prompted to place the wireless power transfer device in a charging area supported by the electronic device, to guide the user to accurately move the device, thereby improving use experience of the user.

In a possible implementation, adjusting the display image of the display screen includes: generating prompt information, where the prompt information includes one or more of the relative position of the first power coil relative to the display screen, a relative position of the first power coil relative to a second power coil of the electronic device, a movement direction of the first power coil, a movement distance of the first power coil, a movement direction of the electronic device, a movement distance of the electronic device, a position of the second power coil, and removal of an interfering object; and the display screen is configured to display the prompt information. A plurality of types of prompt information may be generated to guide the user to accurately move the device, thereby improving use experience of the user.

In a possible implementation, that the processor responds to the feedback signal includes: the processor determines that the feedback signal is a charging interference signal or a touch signal. That the processor determines whether the feedback signal is a touch signal can resolve a problem that the processor incorrectly uses an interference signal as a touch signal for feedback, and reduce a probability of a misoperation of the electronic device.

In a possible implementation, the processor determines that the feedback signal is a charging interference signal, and does not output a touch control signal.

In a possible implementation, the processor determines that the feedback signal is a touch signal, and outputs a touch control signal based on the touch signal.

In a possible implementation, the processor further obtains, in response to the feedback signal, the time period in which the first power coil transmits a signal, and controls a time period in which the touch driver chip collects the feedback signal to intersect with the time period in which the first power coil transmits a signal. The time period in which the touch driver chip collects the feedback signal is controlled to intersect with the time period in which the first power coil transmits a signal, so that at least one of feedback signals collected by the touch driver chip can represent the relative position of the first power coil relative to the display screen, thereby reducing power consumption while a minimum detection requirement is met.

In a possible implementation, controlling the time period in which the touch driver chip collects the feedback signal to intersect with the time period in which the first power coil transmits a signal includes: controlling the time period in which the touch driver chip collects the feedback signal to be within the time period in which the first power coil transmits a signal. A time period in the time period in which the touch driver chip collects the feedback signal is controlled to be in the time period in which the first power coil transmits a signal, so that sampling can be synchronized with a drive signal of the first power coil, to resolve problems of inaccurate detection and missed detection at low power consumption.

According to a second aspect of embodiments of this application, a display screen control method is provided, and is applied to an electronic device. The electronic device includes a display screen and a processor. The display screen includes a touch driver chip and a plurality of spaced touch sensors. The control method includes: When a wireless power transfer device approaches the display screen, the touch sensor receives a transmit signal of a first power coil of the wireless power transfer device, and outputs a feedback signal; the touch driver chip collects a feedback signal output by at least one touch sensor, and sends the feedback signal to the processor, where the feedback signal indicates a relative position of the first power coil relative to the display screen; and the processor adjusts display and/or touch of the display screen in response to the feedback signal. Beneficial effects of the display screen control method provided in the second aspect of embodiments of this application are the same as beneficial effects of the electronic device provided in the first aspect. Details are not described herein again.

In a possible implementation, adjusting display of the display screen includes: adjusting a display status of the display screen.

In a possible implementation, adjusting display of the display screen includes: adjusting a display image of the display screen.

In a possible implementation, responding to the feedback signal includes: determining that the feedback signal is a charging interference signal or a touch signal, and outputting a control signal based on a determining result.

According to a third aspect of embodiments of this application, an electronic device is provided, including a memory and a processor. The memory stores a computer program, and the processor executes the computer program, so that the electronic device performs the display screen control method according to any one of the second aspect.

### BRIEF DESCRIPTION OF DRAWINGS

FIG. 1A is a diagram of a structure of an electronic device according to an embodiment of this application;
FIG. 1B and FIG. 1C are diagrams of an alignment status according to an embodiment of this application;
FIG. 2 is a diagram of a coupling relationship between an electronic device and a first power coil according to an embodiment of this application;
FIG. 3A is a diagram of a principle of touch sampling according to an embodiment of this application;
FIG. 3B is a diagram of a waveform in an idle mode according to an embodiment of this application;
FIG. 3C is a diagram of a waveform in an active mode according to an embodiment of this application;
FIG. 4 is a diagram of an equivalent circuit of a first power coil and an electronic device according to an embodiment of this application;
FIG. 5A is a diagram of a waveform of transmit power of a first power coil according to an embodiment of this application;
FIG. 5B and FIG. 5C each are a timing diagram of a first power coil and a timing diagram of a touch driver chip according to an embodiment of this application;
FIG. 6A is a diagram of determining a position of a first power coil according to an embodiment of this application;
FIG. 6B is a diagram of a procedure of determining a touch signal according to an embodiment of this application;
FIG. 7A is a diagram of coupling interference of a first power coil of a pixel circuit according to an embodiment of this application;
FIG. 7B is driving timing diagrams of a pixel circuit according to an embodiment of this application;
FIG. 7C is a diagram of a display abnormality according to an embodiment of this application;
FIG. 8 is a diagram of a grayscale curve according to an embodiment of this application;
FIG. 9A is a diagram of refresh rates in different display modes according to an embodiment of this application;
FIG. 9B is a diagram of a prompt of a display screen according to an embodiment of this application;
FIG. 10 is driving timing diagrams of a display screen according to an embodiment of this application;
FIG. 11 is a timing diagram of a first power coil and a timing diagram of a display screen according to an embodiment of this application; and
FIG. 12A to FIG. 12C are diagrams of outputting prompt information by a display screen according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms such as "first" and "second" below are only for ease of description, and cannot be understood as indicating or implying relative importance or implicitly indicating a quantity of indicated technical features. Therefore, a feature limited by "first", "second", or the like may explicitly or implicitly include one or more features. In the descriptions of this application, unless otherwise stated, "a plurality of" means two or more than two.

In addition, in embodiments of this application, orientation terms such as ''upper'', ''lower'', "left", and "right" may include but are not limited to definitions based on illustrated orientations in which components in the accompanying drawings are placed. It should be understood that, these directional terms may be relative concepts. They are used for description and clarification of relative positions, and may vary accordingly depending on a change in the orientations in which the components in the accompanying drawings are placed in the accompanying drawings.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium. In addition, the term "coupling" may indicate a direct electrical connection, or may indicate an indirect electrical connection through an intermediate medium. The term "contact" may indicate direct contact or indirect contact through an intermediate medium.

In embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

Embodiments of this application provide an electronic device. The electronic device may be, for example, a foldable electronic device. Certainly, the electronic device may alternatively be a bar-type electronic device. The electronic device is, for example, a mobile phone (mobile phone), a tablet computer (pad), a notebook computer, an e-reader, a personal computer (personal computer, PC), a personal digital assistant (personal digital assistant, PDA), an intelligent wearable product (for example, a smartwatch or a smart band), a virtual reality (virtual reality, VR) device, or an augmented reality (augmented reality, AR) device.

A specific form of the electronic device is not specially limited in embodiments of this application. For ease of description, an example in which the electronic device is a mobile phone is used for description in the following embodiments.

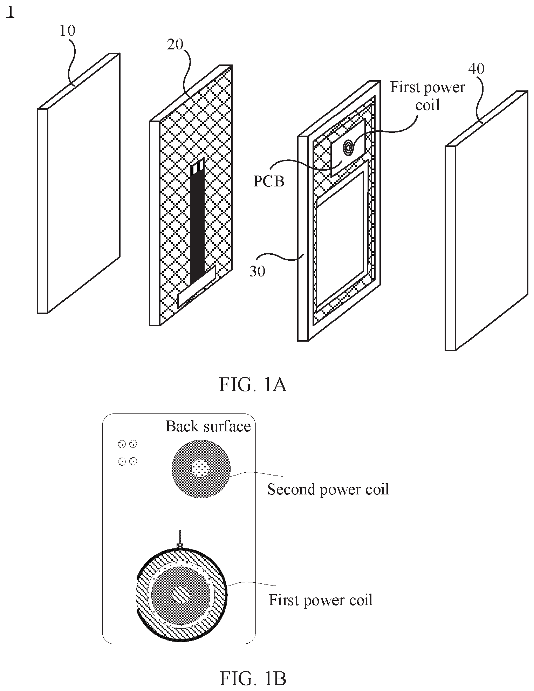

FIG. 1A is a diagram of a structure of an electronic device according to an embodiment of this application.

As shown in FIG. 1A, an electronic device 1 mainly includes a cover plate 10, a display screen 20, a middle frame 30, and a rear housing (or referred to as a battery cover or a housing) 40.

The display screen 20 has a light-emitting side on which a display image can be seen and a back surface disposed opposite to the light-emitting side. The cover plate 10 is located on the light-emitting side of the display screen 20, and the rear housing 40 is located on the back surface of the display screen 20. The display screen 20 includes an active display area (active area, AA), the active display area is used to display an image, and the active display area includes a plurality of sub pixels (sub pixel, SP).

In a possible embodiment, the display screen 20 is a liquid crystal display (liquid crystal display, LCD). Based on this, the electronic device 1 further includes a backlight unit (backlight unit, BLU) located on a back surface of the liquid crystal display. The backlight unit may provide a light source for the liquid crystal display, so that each sub pixel (sub pixel) in the liquid crystal display can emit light to implement image display.

In another possible embodiment, the display screen 20 is a self-luminous display module like an organic light emitting diode (organic light emitting diode, OLED) display module, an active-matrix organic light-emitting diode (active-matrix organic light-emitting diode, AMOLED) display module, a mini light-emitting diode (mini organic light-emitting diode, Mini-OLED) display module, a micro light-emitting diode (micro light-emitting diode, Micro-LED) display module, a micro organic light-emitting diode (micro organic light-emitting diode, Micro-OLED) display module, or a quantum dot light emitting diode (quantum dot light emitting diode, QLED) display module. In this case, the display screen 20 may be a rigid display module, or the display screen 20 may be a flexible display module.

The cover plate 10 is located on a side that is of the display screen 20 and that is away from the middle frame 30. The cover plate 10 is of a transparent structure, and is used as a protective layer to cover a display surface of the display screen 20. In this way, light transmitted by the display surface of the display screen 20 may pass through the cover plate 10 and be received by a user. The display surface of the display screen 20 in this embodiment of this application is a surface that is of the display screen 20 and that is used to display an image to the user. The display surface of the display screen 20 and the light-emitting side of the display screen 20 are located on a same side, and the back surface of the display screen 20 is a surface opposite to the display surface of the display screen 20.

The middle frame 30 is located between the display screen 20 and the rear housing 40, and installation space is formed between the middle frame 30 and the rear housing 40, to accommodate electronic components such as a printed circuit board (printed circuit board, PCB), a battery, a receiver, a speaker, and a camera (camera). The PCB may integrate electronic components such as a main controller, a storage unit, an antenna module, and a power management module of the electronic device. The battery may supply power to the electronic components such as the display screen 20, the circuit board, the receiver, the speaker, and the camera.

In some embodiments, the electronic device 1 further includes chips such as a processor (central processing unit, CPU) chip, a dynamic random access memory (dynamic random access memory, DRAM) chip, a radio frequency chip, a radio frequency power amplifier (power amplifier, PA) chip, a system on a chip (system on a chip, SOC), a power management integrated circuit (power management integrated circuit, PMIC), a storage chip (for example, a high bandwidth memory (high bandwidth memory, HBM)), an audio processor chip, a touchscreen control chip, NAND flash (flash memory), and an image sensor chip that are disposed on the PCB, and the PCB is configured to complete signal exchange with the foregoing chips.

With development of a wireless power transfer (wireless power transfer, WPT) technology, the wireless power transfer technology has been gradually applied to intelligent electronic devices.

In some embodiments, the electronic device includes a second power coil, and a wireless power transfer device includes a first power coil. During wireless power transfer, a handshake protocol detects, by sending a personal identification number (personal identification number, PIN) in real time through the first power coil, whether the second power coil is located in an operating area of the first power coil. If the PIN can form a closed loop, wireless power transfer starts; or if the PIN cannot form a closed loop, a handshake is waited for at a specific frequency based on a specific cycle.

In this solution, whether a wireless power transfer coil is located at a proper position is mainly determined by using the wireless power transfer coil. Usually, an optimal charging position is first obtained. When the second power coil is located at the optimal charging position, there is highest charging efficiency and an optimal charging current. Whether the second power coil (namely, the electronic device) is located at the optimal position is determined by determining whether ideal charging efficiency and an idle charging current are achieved. When the second power coil is not located at the optimal position, the user is prompted with a relative direction of the optimal position relative to a current position, or the user is directly prompted with a specific position of the optimal position. The user may be prompted via the display screen, or may be prompted through a light, a voice, vibration, or the like.

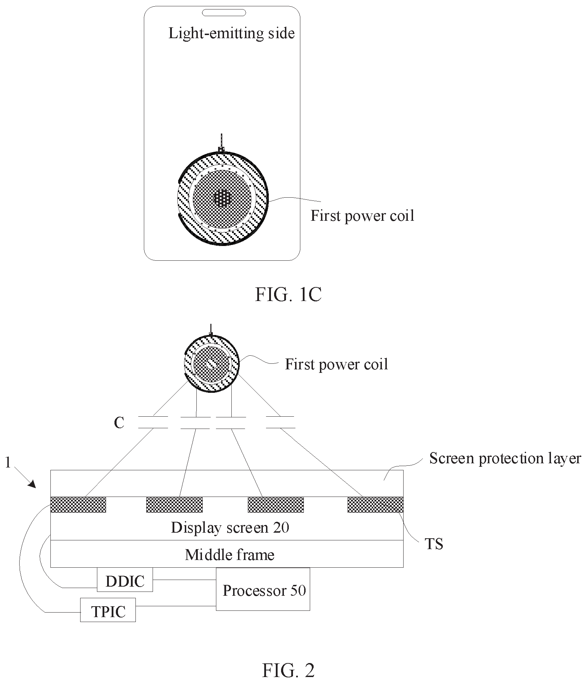

FIG. 1B and FIG. 1C are diagrams of an alignment status according to an embodiment of this application.

However, if the first power coil and the second power coil are used to determine the alignment status, prompt information can be sent to the user only after the first power coil and the second power coil establish a connection (the handshake succeeds). In addition, the handshake may succeed only when alignment is performed in an active operating area of the first power coil and the second power coil, and the handshake cannot succeed outside the active operating area of the first power coil and the second power coil. As shown in FIG. 1B, when the first power coil is located outside the active area of the second power coil, the first power coil and the second power coil cannot shake hands. For example, the second power coil is located in a primary screen area of the electronic device 1, but the first power coil is located in a secondary screen area of the electronic device 1. Alternatively, for example, for a multi-fold product, due to diversified folding forms, the active area of the second power coil of the electronic device in a form is never aligned with the first power coil. Consequently, the first power coil and the second power coil can never shake hands, and no subsequent reminder can be given. In addition, because a periodic PIN interferes with display, as shown in FIG. 1C, when the first power coil is placed on the light-emitting side of the display screen 20, a display abnormality (for example, a ripple appears, or bright lines and dark lines flicker) occurs. However, when the first power coil is placed on the light-emitting side of the display screen 20, the first power coil is also located outside the active area of the second power coil, and no reminder is given.

Based on this, embodiments of this application provide a new means to identify whether the first power coil is located above the display screen 20, whether wireless power transfer interference exists, and whether alignment is accurate. When the first power coil is detected, antiinterference may be increased by adjusting display, and the like, or the user may be reminded to remove the wireless power transfer device.

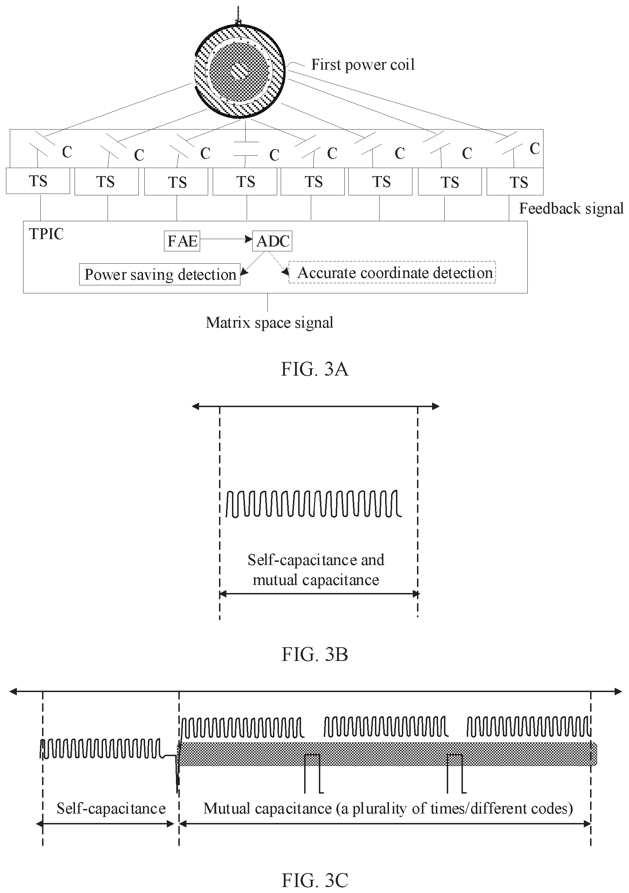

FIG. 2 is a diagram of a coupling relationship between an electronic device and a first power coil according to an embodiment of this application. FIG. 3A is a diagram of a principle of touch sampling according to an embodiment of this application.

An embodiment of this application provides an electronic device 1. As shown in FIG. 2, the electronic device 1 includes a display screen 20 and a processor 50.

The display screen 20 is configured to display an image, and the display screen 20 may be any one of the foregoing display screens. The display screen 20 further has a touch function, and the display screen 20 may be any display screen having the touch function.

For example, the display screen 20 includes a touch driver chip (touch panel driver integrated circuit, TPIC) and a plurality of spaced touch sensors (touch sensor, TS), and the plurality of touch sensors TSs may be, for example, arranged in an array. After a wireless power transfer device approaches the display screen 20 and a first power coil of the wireless power transfer device transmits a signal, the touch sensor TS is configured to: receive the transmit signal of the first power coil of the wireless power transfer device, and output a feedback signal. For example, the first power coil may form coupling capacitance C with the touch sensor TS, and the touch sensor TS is configured to receive transmit power of the first power coil through capacitive coupling with the first power coil.

For example, the touch sensor TS includes a touch detection electrode and a common electrode, and self-capacitance is formed between the touch detection electrode and the common electrode. External capacitance is formed between the touch detection electrode and a finger, and the external capacitance and the self-capacitance of the touch detection electrode form a coupling electric field between the touch detection electrode and the finger. A change of the external capacitance changes a magnitude of the self-capacitance, and a position of a touch point is calculated based on a change of capacitance at the position of the touch point.

In some embodiments, the electronic device 1 further includes a screen protection layer and a middle frame, and the screen protection layer is disposed on a light-emitting side of the display screen 20, and is configured to protect the display screen 20. The middle frame is disposed on a back surface of the display screen 20, and is configured to carry the display screen 20. The electronic device 1 may further include another film layer structure. The electronic device 1 shown in this embodiment of this application merely shows a partial structure included in the electronic device 1, and does not constitute a limitation on the electronic device provided in this embodiment of this application.

For example, the touch driver chip TPIC may be fastened to the middle frame. As shown in FIG. 3A, the touch driver chip TPIC is coupled to at least one touch sensor TS, and is configured to: collect a feedback signal output by the at least one touch sensor TS, and send the feedback signal to the processor 50. The feedback signal indicates a relative position of the first power coil relative to the display screen 20, and the feedback signal may further indicate whether a touch object (for example, the finger) performs a touch operation on the display screen 20.

Alternatively, it is understood that the touch sensor TS has a touch feedback function. A principle of implementing the touch feedback function by the touch sensor TS is the same as a touch principle in a related technology, and details are not described herein again. On this basis, the touch sensor TS further has an interference feedback function of the first power coil. An alignment status of the first power coil is determined by using the touch sensor TS and no longer using a second power coil inside the electronic device 1.

For example, the touch driver chip TPIC receives feedback signals output by the plurality of touch sensors TSs that are arranged in an array, collects the feedback signals, and then outputs a matrix space (rawdata) signal.

A manner in which the touch driver chip TPIC demodulates the feedback signal output by the touch sensor TS is not limited in this embodiment of this application, provided that the touch driver chip TPIC receives an analog signal output by the touch detection electrode and converts the analog signal into a digital signal for output. For example, the feedback signal may be decoupled by performing processing such as analog-to-digital conversion (analog-to-digital conversion, ADC), analog filtering (FAE), and self-mutual capacitance detection on the feedback signal. A structure of the touch driver chip TPIC in the related technology is applicable to this embodiment of this application.

FIG. 3B is a diagram of a waveform in a power saving detection (idle) mode according to an embodiment of this application. FIG. 3C is a diagram of a waveform in an accurate coordinate detection (active) mode according to an embodiment of this application.

For example, the touch driver chip TPIC collects the feedback signal in the idle mode. As shown in FIG. 3B, the touch driver chip TPIC quickly collects a self-capacitance feedback signal and a mutual-capacitance feedback signal of the touch sensor TS in short time, to output a matrix space signal.

Alternatively, for example, the touch driver chip TPIC collects the feedback signal in the active mode. As shown in FIG. 3C, the touch driver chip TPIC collects a self-capacitance feedback signal of the touch sensor TS, and then repeatedly collects a mutual capacitance feedback signal of the touch sensor TS a plurality of times, to output a matrix space signal.

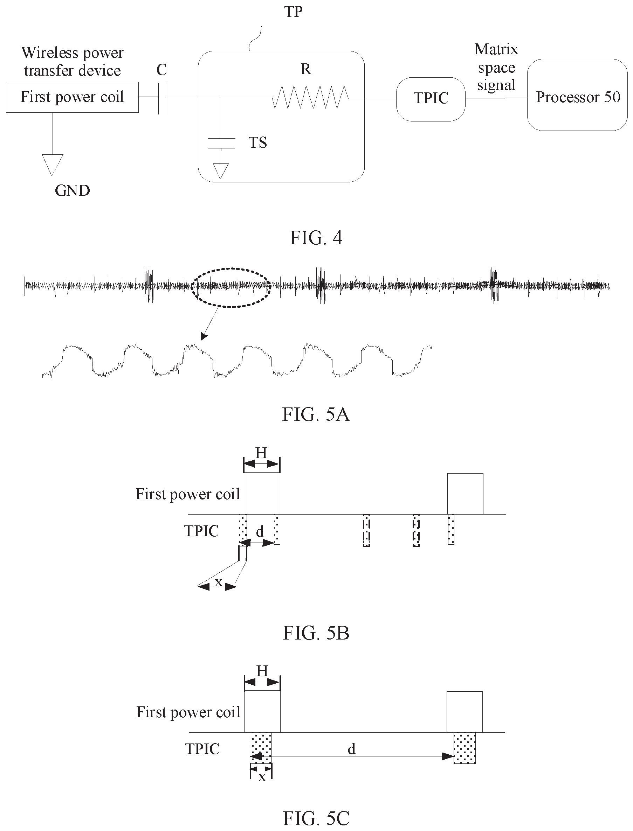

FIG. 4 is a diagram of an equivalent circuit of a first power coil and an electronic device according to an embodiment of this application.

As shown in FIG. 4, a signal path may be formed between the first power coil and the electronic device 1. One end of the first power coil is equivalently grounded GND, and the other end of the first power coil forms coupling capacitance C with the touch sensor TS. A signal of the first power coil is coupled to the touch sensor TS via the coupling capacitance C, and then is transmitted to the touch driver chip TPIC via the touch sensor TS. A trace between the touch sensor TS and the touch driver chip TPIC may be equivalent to a resistor R.

FIG. 5A is a diagram of a waveform of transmit power of a first power coil according to an embodiment of this application.

As shown in FIG. 5A, the first power coil periodically transmits a frequency waveform (a detection signal). If a wireless power transfer receiving apparatus (the second power coil in the electronic device 1) is detected, a charging handshake is completed; or if no wireless power transfer receiving apparatus is detected, the frequency waveform is continuously transmitted.

As shown in FIG. 4, when the first power coil is located above the display screen 20, the first power coil and the display screen 20 form a transmission detection circuit. In this case, the touch driver chip TPIC periodically detects the signal transmitted by the first power coil, and outputs a matrix space signal. When the signal transmitted by the first power coil is coupled to the self-capacitance of the touch detection electrode via the coupling capacitance C between the first power coil and the touch detection electrode in the touch sensor TS, the touch driver chip TPIC demodulates a signal on the touch detection electrode, converts an analog signal into a digital signal, and outputs a matrix space signal. Because a frequency band of the signal transmitted by the first power coil differs greatly from a frequency band of a signal generated through a touch, the processor 50 may determine, based on a frequency and a magnitude that correspond to the matrix space signal, whether the first power coil is located above the display screen 20.

FIG. 5B and FIG. 5C each are a timing diagram of a first power coil and a timing diagram of a touch driver chip according to an embodiment of this application.

In some embodiments, the processor 50 further obtains, in response to the feedback signal, a time period in which the first power coil transmits a signal. As shown in FIG. 5B, a time period in which the touch driver chip DDIC collects the feedback signal is controlled to intersect with the time period in which the first power coil transmits a signal.

For example, in FIG. 5B, the time period (a drive signal width) in which it is detected that the first power coil transmits a signal is H, the time period in which the touch driver chip TPIC collects the feedback signal is x, and a cycle in which the touch driver chip TPIC collects the feedback signal is d. The time period x in which the touch driver chip TPIC collects the feedback signal intersects with the time period H in which the first power coil transmits a signal. However, a relationship between the cycle in which the touch driver chip TPIC collects the feedback signal and a cycle in which the first power coil transmits a signal is not limited. For example, the cycle in which the touch driver chip TPIC collects the feedback signal may be less than the cycle in which the first power coil transmits a signal, or it is understood that a frequency at which the touch driver chip TPIC collects the feedback signal is greater than a frequency at which the first power coil transmits a signal.

For example, the touch driver chip DDIC is controlled to frequently collect the feedback signal, provided that one collection time period x intersects with a drive signal time period H. Each drive signal time period H may intersect with one collection time period x, or a part of drive signal time periods H may intersect a collection time period x.

The time period x in which the touch driver chip TPIC collects the feedback signal is controlled to intersect with the time period H in which the first power coil transmits a signal, so that at least one of feedback signals collected by the touch driver chip TPIC can represent the relative position of the first power coil relative to the display screen 20, thereby reducing power consumption while a minimum detection requirement is met.

In some embodiments, as shown in FIG. 5C, at least one time period in which the touch driver chip TPIC is controlled to collect the feedback signal is within the time period in which the first power coil transmits a signal.

For example, a frequency at which the first power coil transmits a signal is F=0.747 Hz, a cycle T=1.339s, and a drive signal width H=6.6 ms. The time period in which the touch driver chip TPIC collects the feedback signal is x, and a cycle is d. A minimum width x ms (x ms<H ms) is required for each detection of the touch driver chip TPIC, and a cycle is set to d ms. In this case, if the touch driver chip TPIC needs to be able to detect each signal transmitted by the first power coil, the detection time period x and the cycle d need to satisfy H = d + 2x.

In consideration of a worst case, in the drive signal width H of the signal transmitted by the first power coil, one time of detection happens to be not completed, that is, detection is performed in time y<x ms. In this case, another detection time period x is just enough. In this case, H - y = d + x needs to be satisfied, that is, H = d + x + y. Therefore, if H = d + 2x, it is sure to satisfy that the touch driver chip TPIC can detect each signal transmitted by the first power coil. If x=0.15 µs, d=6.6 ms-2*0.15=6.3 ms, a frequency t is 159 Hz.

A time period in the time period in which the touch driver chip TPIC collects the feedback signal is controlled to be in the time period in which the first power coil transmits a signal, so that sampling can be synchronized with a drive signal of the first power coil, to resolve problems of inaccurate detection and missed detection at low power consumption.

The processor 50 is, for example, an application processor (application processor, AP), and the processor 50 may be, for example, fastened to the middle frame, and coupled to the touch driver chip TPIC.

In some embodiments, the processor 50 analyzes the matrix space signal output by the touch driver chip TPIC, finds a row and a column corresponding to a largest point, and determines a position of the first power coil. In this way, a principle is simple.

For example, the processor 50 determines, based on the matrix space signal, whether interference exists, further determines whether the interference is generated by the first power coil, and then determines the position of the first power coil.

Alternatively, for example, the processor 50 directly determines, based on the matrix space signal, whether the first power coil generates interference, and determines the position of the first power coil.

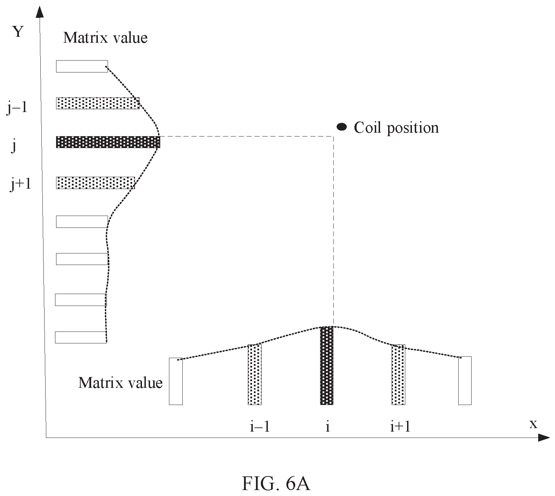

FIG. 6A is a diagram of determining a position of a first power coil according to an embodiment of this application.

In some other embodiments, the processor 50 accurately determines the position of the first power coil by using a perpendicular bisector algorithm.

For example, as shown in FIG. 6A, a column i corresponding to the largest point in the matrix space signal and a matrix value *Rᵢ* corresponding to the point are first found. For example, in Formula (1), a weighted average of several columns centered on an *i*^{th} column (for example, three columns are sampled) is calculated, to obtain an accurate horizontal coordinate. In Formula (1), K is a coordinate coefficient. $X = K ∗ \frac{{R}_{i - 1} ∗ \left(i-1\right) + {R}_{i} ∗ i + {R}_{i + 1} ∗ \left(i+1\right)}{{R}_{i - 1} + {R}_{i} + {R}_{i + 1}}$ (1)

Similarly, a column j corresponding to the largest point in the matrix space signal and a matrix value *Rⱼ* corresponding to the point are first found. For example, in Formula (2), a weighted average of several columns centered on a j^{th} column (for example, three columns are sampled) is calculated, to obtain an accurate horizontal coordinate. In Formula (2), K is a coordinate coefficient. $Y = K ∗ \frac{{R}_{j - 1} ∗ \left(j-1\right) + {R}_{j} ∗ j + {R}_{j + 1} ∗ \left(j+1\right)}{{R}_{j - 1} + {R}_{j} + {R}_{j + 1}}$ (2)

Specific coordinates of the first power coil may be obtained based on a first direction X and a second direction Y.

To be specific, the coupling capacitance of the first power coil and the touch sensor TS is converted into a digital matrix value R, and then coordinates in the directions X and Y are obtained based on the perpendicular bisector algorithm, that is, specific coordinate values of the first power coil on the display screen 20 are obtained.

The electronic device 1 provided in this embodiment of this application identifies, based on a touch detection technology corresponding to the display screen 20, whether the first power coil is located above the display screen 20 in a third direction Z (thickness direction), and pixel positions of the first power coil on the display screen 20 in the first direction X and the second direction Y, to determine the relative position of the first power coil relative to the display screen 20 (an absolute position of the first power coil). The processor 50 adjusts display of the display screen 20 in response to a feedback signal that represents position information, to give feedback on a detection result. Based on this, a second power coil in the electronic device 1 does not need to participate in detection of a position of the first power coil. When the first power coil is located outside an area in which the second power coil may perform collection, the position of the first power coil may still be detected. Without being limited by a prerequisite that a handshake between the first power coil and the second power coil succeeds, or an active detection area of the second power coil, a detection result is more accurate.

The processor 50 further adjusts display and/or touch of the display screen 20 in response to the feedback signal. That is, the processor 50 analyzes a detection result of the touch driver chip TPIC, and performs control matching the detection result, to control the display screen 20 to present the detection result.

For example, the processor 50 determines, based on the matrix space signal output by the touch driver chip TPIC, that the feedback signal is a charging interference signal or a touch signal. For example, when determining that the feedback signal is a touch signal, the processor 50 outputs a touch control signal based on the touch signal, and the processor 50 controls the display screen 20 to perform touch feedback display. When the processor 50 determines that the feedback signal is a charging interference signal, the processor 50 does not output a touch control signal, and the processor 50 controls the display screen 20 to perform interference feedback display. Feedback of the electronic device 1 on the touch signal may be the same as that in the related technology, and feedback of the electronic device 1 on the charging interference signal may be any type of feedback in the related technology. This is not limited in this embodiment of this application.

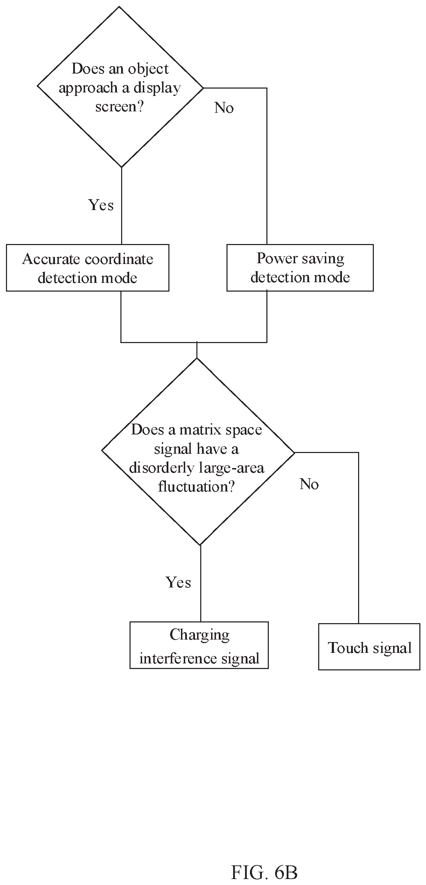

FIG. 6B is a diagram of a procedure of determining a touch signal according to an embodiment of this application.

For example, as shown in FIG. 6B, detection performed on the feedback signal by the touch driver chip TPIC includes the idle mode and the active mode. When no object approaches the display screen 20, the touch driver chip TPIC is in the idle mode. When an object approaches the display screen 20, detection performed on the feedback signal by the touch driver chip TPIC enters the active mode from the idle mode. The processor 50 analyzes the matrix space signal output by the touch driver chip TPIC, and determines whether the matrix space signal has a disorderly large-area fluctuation. If the matrix space signal has a large-area fluctuation and is clearly different from a matrix space signal corresponding to a conventional touch signal, the processor 50 determines that the feedback signal is a charging interference signal, and does not output the touch control signal. If the matrix space signal does not have a large-area fluctuation, the processor 50 determines that the feedback signal is a touch signal, and outputs the touch control signal.

That the processor 50 determines whether the feedback signal is a touch signal can resolve a problem that the processor 50 incorrectly uses an interference signal as a touch signal for feedback, and reduce a probability of a misoperation ("ghost touch") of the electronic device 1.

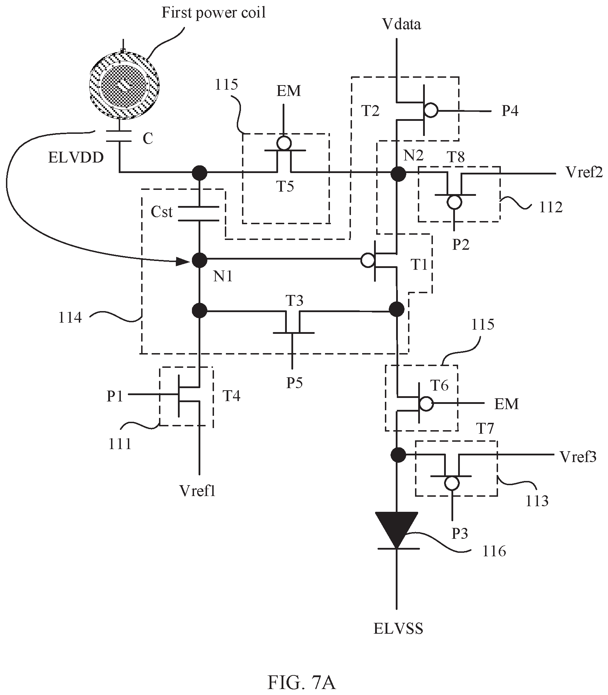

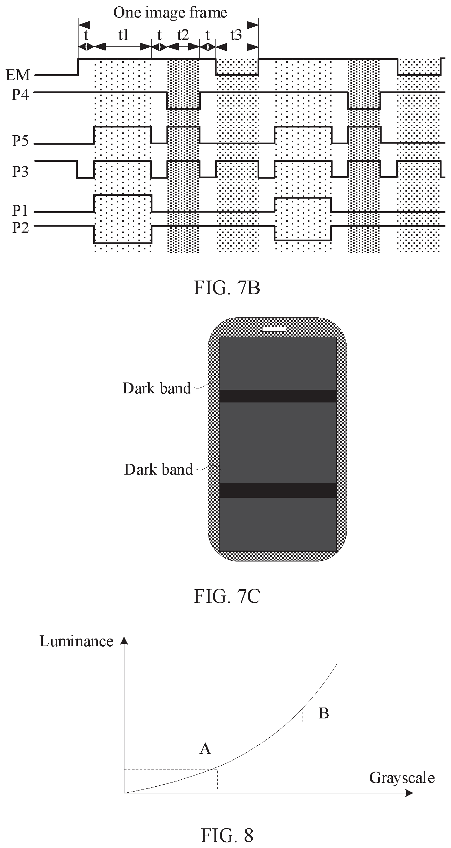

FIG. 7A is a diagram of coupling interference of a first power coil of a pixel circuit according to an embodiment of this application. FIG. 7B is driving timing diagrams of a pixel circuit according to an embodiment of this application. FIG. 7C is a diagram of a display abnormality according to an embodiment of this application.

For any one of the foregoing display screens 20, the display screen 20 includes an active display area (active area, AA) and a non-display area around the active display area. The active display area is used to display an image, and the active display area includes a plurality of sub pixels (sub pixel, SP). For example, the plurality of sub pixels are arranged in a matrix form in a plurality of rows and a plurality of columns. A pixel circuit is disposed in each sub pixel, a plurality of pixel circuits are disposed in the active display area of the display screen 20, and the plurality of pixel circuits are arranged in a plurality of rows and a plurality of columns.

For example, a pixel circuit 11 includes a first reset circuit 111, a second reset circuit 112, a third reset circuit 113, a writing and threshold compensation circuit 114, a light emission control circuit 115, and a light emitting device 116. The writing and threshold compensation circuit 114 includes a drive thin film transistor (drive thin film transistor, DTFT) T1, a second transistor T2, a third transistor T3, and a storage capacitor Cst. The first reset circuit 111 includes a fourth transistor T4, the second reset circuit 112 includes an eighth transistor T8, the third reset circuit 113 includes a seventh transistor T7, and the light emission control circuit 115 includes a fifth transistor T5 and a sixth transistor T6.

A control electrode of the drive thin film transistor T1 is electrically connected to a first node N1, a first electrode of the drive thin film transistor T1 is electrically connected to a second node N2, and a second electrode of the drive thin film transistor T1 is electrically connected to a first electrode of the third transistor T3. A control electrode of the second transistor T2 is electrically connected to a fourth control signal terminal P4, a first electrode of the second transistor T2 is electrically connected to a data voltage terminal Vdata, and a second electrode of the second transistor T2 is electrically connected to the second node N2. A control electrode of the third transistor T3 is electrically connected to a fifth control signal terminal P5, and a second electrode of the third transistor T3 is electrically connected to the first node N1. One terminal of the storage capacitor Cst is electrically connected to the first node N1, and the other terminal of the storage capacitor Cst is coupled to a first power voltage terminal ELVDD. A control electrode of the fourth transistor T4 is electrically connected to a first control signal terminal P1, a first electrode of the fourth transistor T4 is electrically connected to a first reset voltage terminal Vref1, and a second electrode of the fourth transistor T4 is electrically connected to the first node N1. A control electrode of the seventh transistor T7 is electrically connected to a third control signal terminal P3, a first electrode of the seventh transistor T7 is electrically connected to a third reset voltage terminal Vref3, and a second electrode of the seventh transistor T7 is electrically connected to an anode of the light emitting device 116. A control electrode of the eighth transistor T8 is electrically connected to a second control signal terminal P2, a first electrode of the eighth transistor T8 is electrically connected to a second reset voltage terminal Vref2, and a second electrode of the eighth transistor T8 is electrically connected to the second node N2. A control electrode of the fifth transistor T5 is electrically connected to a light emission control signal terminal EM, a first electrode of the fifth transistor T5 is electrically connected to the first power voltage terminal ELVDD, and a second electrode of the fifth transistor T5 is electrically connected to the second node N2. A control electrode of the sixth transistor T6 is electrically connected to the light emission control signal terminal EM, a first electrode of the sixth transistor T6 is electrically connected to the second electrode of the drive thin film transistor T1, and a second electrode of the sixth transistor T6 is electrically connected to the anode of the light emitting device 116.

As shown in FIG. 7B, a light emitting process of the pixel circuit 11 in one image frame may be divided into an initialization phase t1, a data writing and compensation phase t2, a light emitting phase t3, and an anode reset phase t.

In the initialization phase t1:
A first control signal of the first control signal terminal P1 changes from a low level to a high level, and then changes from the high level to the low level. Therefore, the fourth transistor T4 changes from being turned off to being turned on, and then changes from being turned on to being turned off. A second control signal of the second control signal terminal P2 changes from a high level to a low level, and then changes from the low level to the high level. Therefore, the eighth transistor T8 changes from being turned off to being turned on, and then changes from being turned on to being turned off.

A fifth control signal of the fifth control signal terminal P5 remains at a low level, a fourth control signal of the fourth control signal terminal P4 and a light emission control signal of the light emission control signal terminal EM each remain at a high level. Therefore, the seventh transistor T7, the second transistor T2, the third transistor T3, the fifth transistor T5, and the sixth transistor T6 each remain in an off state.

In the data writing and compensation phase t2:
The fourth control signal of the fourth control signal terminal P4 changes from a high level to a low level, and then changes from the low level to the high level. Therefore, the second transistor T2 changes from being turned off to being turned on, and then changes from being turned on to being turned off. A fifth control signal of the fifth control signal terminal P5 changes from a low level to a high level, and then changes from the high level to the low level. Therefore, the third transistor T3 changes from being turned off to being turned on, and then changes from being turned on to being turned off.

A second control signal of the second control signal terminal P2, a third control signal of the third control signal terminal P3, and the light emission control signal of the light emission control signal terminal EM each remain at the high level, and a first control signal of the first control signal terminal P1 remains at the low level. Therefore, the seventh transistor T7, the eighth transistor T8, the fifth transistor T5, the sixth transistor T6, and the fourth transistor T4 each remain in the off state.

In the data writing and compensation phase t2, the second transistor T2, the third transistor T3, and the drive thin film transistor T1 are separately turned on, to implement storage of a data voltage of the data voltage terminal Vdata in the storage capacitor Cst, which completes writing of the data voltage. In addition, a threshold voltage of the drive thin film transistor T1 is compensated for. A process of compensating for the threshold voltage of the drive thin film transistor T1 may be considered as a process in which the drive thin film transistor T1 changes from an on state to the off state.

In the light emitting phase t3:
The light emission control signal changes from a high level to a low level, and then changes from the low level to the high level. Therefore, the sixth transistor T6 and the fifth transistor T5 change from being turned off to being turned on, and then changes from being turned on to being turned off.

The first control signal of the first control signal terminal P1 and the fifth control signal of the fifth control signal terminal P5 remain at the low level, and the fourth transistor T4 and the third transistor T3 each remain in the off state. The second control signal of the second control signal terminal P2, the third control signal of the third control signal terminal P3, and the fourth control signal of the fourth control signal terminal P4 each remain at the high level, and the seventh transistor T7, the eighth transistor T8, and the second transistor T2 each remain in the off state.

In the light emitting phase t3, the fifth transistor T5, the drive thin film transistor T1, and the sixth transistor T6 are separately turned on, to transmit a drive current to the light emitting device 116, and the light emitting device 116 emits light under driving of the drive current.

In the anode reset phase t:
The third control signal of the third control signal terminal P3 changes from the high level to a low level, and then changes from the low level to the high level. Therefore, the seventh transistor T7 changes from being turned off to being turned on, and then changes from being turned on to being turned off.

The first control signal of the first control signal terminal P1 and the fifth control signal of the fifth control signal terminal P5 always remain at the low level, and the second control signal of the second control signal terminal P2, the fourth control signal of the fourth control signal terminal P4, and the light emission control signal of the light emission control signal terminal EM always remain at the high level. The third transistor T3, the fourth transistor T4, the second transistor T2, the fifth transistor T5, the sixth transistor T6, and the eighth transistor T8 each remain in the off state.

The first power coil is placed above the display screen 20, causing interference to display of the display screen 20. When the first power coil is located above the display screen 20, coupling interference caused by the first power coil affects a potential at a gate electrode (the first node N1) of the drive thin film transistor T1. In this case, if an original display policy is still used, driven by original timing, as shown in FIG. 7C, a disadvantage such as a ripple may occur. In addition, when an image is not refreshed, a low-refresh-rate mode (for example, an always on display mode) is automatically entered. After the low-refresh-rate mode is entered, a display antiinterference capability is further reduced, and a display abnormality is clearer.

In some embodiments, the processor 50 adjusts a display status of the display screen 20 in response to the feedback signal, to reduce impact of the first power coil on display.

For example, when the processor 50 detects that the first power coil exists above the display screen 20, the processor 50 adjusts the display status of the display screen 20 in response to the feedback signal.

Alternatively, for example, the processor 50 is configured to adjust the display status of the display screen 20 when the relative position of the first power coil relative to the display screen 20 indicates that the first power coil is located within a specified distance on a light-emitting side of the display screen 20.

When the first power coil is far away from the display screen 20, impact on display may be negligible, and the display status of the display screen 20 may not need to be adjusted. A distance determining step is added. When the first power coil has small impact on display, the display status of the display screen 20 may not need to be adjusted, thereby reducing power consumption.

For example, as shown in FIG. 2, the electronic device further includes a display driver integrated circuit (display driver integrated circuit, DDIC), and the display driver integrated circuit DDIC adjusts the display status of the display screen 20 under control of the processor 50. For example, the display driver integrated circuit DDIC is separately coupled to the processor 50 and the display screen 20.

The ripple is display effect, and interference time may be avoided from perspectives such as shielding, improving a charging rate, avoiding a sensitive frequency, and changing a display condition. The following describes an example of a manner of adjusting the display status of the display screen 20 in this embodiment of this application.

FIG. 8 is a diagram of a grayscale curve according to an embodiment of this application.

In a first implementation, the processor 50 controls the display driver integrated circuit DDIC to improve display luminance of the display screen 20.

For example, as shown in FIG. 8, initial display luminance of the display screen 20 is at a point A. After determining that the first power coil exists above the display screen 20, when finding that a display abnormality may occur, the processor 50 sends a control signal to the display driver integrated circuit DDIC, to increase the display luminance of the display screen 20 to a point B, and increase grayscale luminance of the display screen 20. After determining that the first power coil above the display screen 20 disappears, the processor 50 sends a control signal to the display driver integrated circuit DDIC, to return the display luminance of the display screen 20 to the point A, and reduce the grayscale luminance of the display screen 20.

For example, the grayscale luminance of the display screen 20 is adjusted by changing a duty cycle and a frequency of the light emission control signal of the light emission control signal terminal EM.

In a highlight mode, a ripple is not easy to notice or disappears. Therefore, increasing the display luminance of the display screen 20 can resolve a problem of display interference caused by the first power coil.

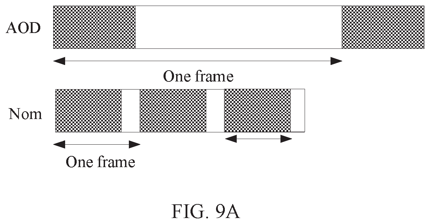

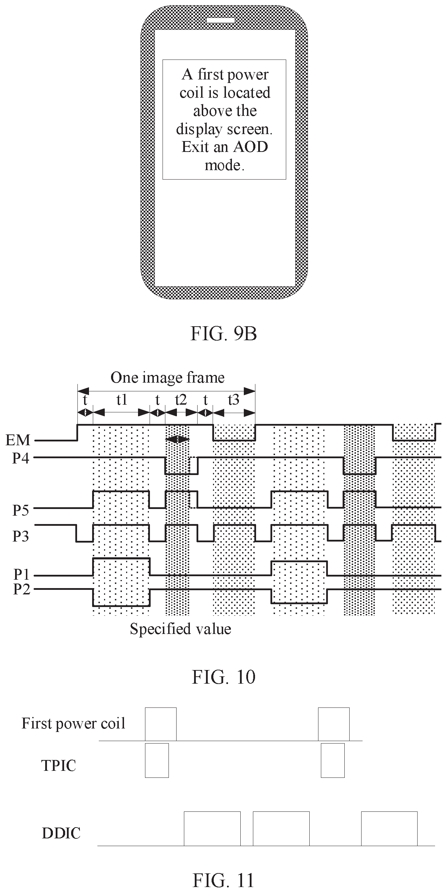

FIG. 9A is a diagram of refresh rates in different display modes according to an embodiment of this application. FIG. 9B is a diagram of a prompt of a display screen according to an embodiment of this application.

In a second implementation, the processor 50 controls the display driver integrated circuit DDIC to drive the display screen 20 to exit the always on display (always on display, AOD) mode or not enter the always on display mode.

For example, as shown in FIG. 9A, the display screen 20 performs display at a high refresh rate in a normal mode (normal mode, Nom). When detecting that the first power coil exists above the display screen 20, the processor 50 sends a control signal to the display driver integrated circuit DDIC, to drive the display screen 20 to always perform display at the high refresh rate (for example, the refresh rate is greater than 30 Hz) and not enter the always on display mode. After determining that the first power coil above the display screen 20 disappears, the processor 50 may send a control signal to the display driver integrated circuit DDIC based on an application scenario, to drive the display screen 20 to enter the always on display mode.

Alternatively, for example, as shown in FIG. 9A, the display screen 20 has entered the always on display mode, and performs display at a low refresh rate. When detecting that the first power coil exists above the display screen 20, the processor 50 sends a control signal to the display driver integrated circuit DDIC, to drive the display screen 20 to perform display at a high refresh rate and exit the always on display mode. After determining that the first power coil above the display screen 20 disappears, the processor 50 may send a control signal to the display driver integrated circuit DDIC based on an application scenario, to drive the display screen 20 to enter the always on display mode.

In some embodiments, to exit the always on display mode, the processor 50 controls the display driver integrated circuit DDIC to drive the display screen 20 to directly exit the always on display mode.

In some other embodiments, as shown in FIG. 9B, to exit the always on display mode, the processor 50 controls the display driver integrated circuit DDIC to drive the display screen 20 to display a prompt message, to remind a user that the first power coil is located above the display screen and exit the always on display mode. After (or while) displaying the prompt information, the display screen 20 exits the always on display mode.

A refresh rate of the display screen 20 in the always on display mode is not limited in this embodiment of this application. Different refresh rates may be set for different electronic devices 1 as refresh rates in the always on display mode. For example, the refresh rate of the display screen 20 is less than 30 Hz in the always on display mode. For example, whether the display screen 20 enters the always on display mode may be determined based on the refresh rate, a display image, or the like.

In a low refresh rate display status, a ripple phenomenon of the display screen 20 is clear. After the refresh rate of the display screen 20 is increased, display effect of the display screen 20 may be improved.

FIG. 10 is driving timing diagrams of a display screen according to an embodiment of this application.

In a third implementation, the processor 50 controls duration of a data write signal that is output by the display driver integrated circuit DDIC to the display screen 20 to be greater than a specified value.

For example, in the data writing and compensation phase t2, the second transistor T2, the third transistor T3, and the drive thin film transistor T1 implement storage of the data voltage of the data voltage terminal Vdata in the storage capacitor Cst, which changes a capacitance value of the storage capacitor Cst, and completes writing of the data voltage. As shown in FIG. 10, when it is detected that the first power coil exists above the display screen 20, the processor 50 sends a control signal to the display driver integrated circuit DDIC, to control the duration of the data write signal output by the display driver integrated circuit DDIC to the display screen 20 to be greater than a default specified value. In other words, duration in which the second transistor T2, the third transistor T3, and the drive thin film transistor T1 are turned on is controlled to be greater than a specified value, to prolong time for charging the gate electrode of the drive thin film transistor T1. After it is determined that the first power coil above the display screen 20 disappears, the processor 50 is controlled to send a control signal to the display driver integrated circuit DDIC, to control the duration of the data write signal output by the display driver integrated circuit DDIC to the display screen 20 to be restored to a default value.

For example, when the first power coil is located above the display screen 20, duration of a data write signal output by the display driver integrated circuit DDIC to each row of pixels on the display screen 20 is greater than the specified value.

Alternatively, for example, when the first power coil is located above the display screen 20, duration of a data write signal output by the display driver integrated circuit DDIC to a part of rows of pixels on the display screen 20 is greater than the specified value.

Because the first power coil affects the potential of the gate electrode of the drive thin film transistor, effect of charging the gate electrode of the drive thin film transistor is affected. Prolonging the duration of the data write signal to prolong charging time increases stability of a capacitor Cd in a drive circuit, thereby reducing display interference.

FIG. 11 is a timing diagram of a first power coil and a timing diagram of a display screen according to an embodiment of this application.

In a fourth implementation, as shown in FIG. 11, the processor 50 controls a time period in which the display driver integrated circuit DDIC outputs a data write signal to the display screen 20 to not intersect with a time period in which the first power coil transmits a signal.

For example, as shown in FIG. 11, when the first power coil transmits a signal (or referred to as a drive signal), the touch driver chip TPIC collects the feedback signal from the display screen 20, but the display driver integrated circuit DDIC does not send the data write signal to the display screen 20. When the first power coil does not transmit a signal, the display driver integrated circuit DDIC sends the data write signal to the display screen 20. In other words, the time period in which the first power coil transmits a signal is exactly staggered from the time period in which the display driver integrated circuit DDIC sends the data write signal to the display screen 20.

For example, the electronic device 1 may continuously detect whether the first power coil exists above the display screen 20, and when detecting that the first power coil exists above the display screen 20, detect whether the first power coil sends a signal. When it is detected that the first power coil sends a signal, the display driver integrated circuit DDIC suspends sending the data write signal to the display screen 20.

Alternatively, for example, the electronic device 1 continuously detects, a plurality of times, whether the first power coil sends a signal, and summarizes a rule of sending a signal by the first power coil. Then, timing in which the display driver integrated circuit DDIC sends the data write signal to the display screen 20 is adjusted, so that the time period in which the data write signal is sent exactly avoids the time period in which the first power coil sends a signal.

Enabling the time period in which the display driver integrated circuit DDIC outputs the data write signal to the display screen 20 to not intersect with the time period in which the first power coil transmits a signal can avoid interference of the first power coil to effect of charging the gate electrode of the drive thin film transistor, thereby reducing display interference.

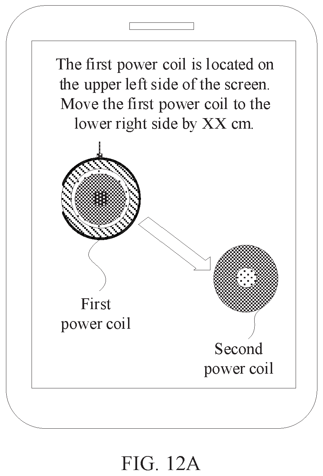

FIG. 12A to FIG. 12C are diagrams of outputting prompt information by a display screen according to an embodiment of this application.

In some other embodiments, the processor 50 adjusts the display image of the display screen 20 in response to the feedback signal. Based on a detected actual position of the first power coil on the display screen 20, and a folded state and a screen status of the electronic device 1, the user is prompted to place the wireless power transfer device in a charging area supported by the electronic device 1, to guide the user to accurately move the device, thereby improving use experience of the user.

For example, the processor 50 generates a prompt signal in response to the feedback signal, and the display screen 20 displays the prompt information. For example, the prompt information includes one or more of the relative position of the first power coil relative to the display screen 20, a relative position of the first power coil relative to a second power coil of the electronic device 1, a movement direction of the first power coil, a movement distance of the first power coil, a movement direction of the electronic device 1, a movement distance of the electronic device 1, a position of the second power coil, and removal of an interfering object.

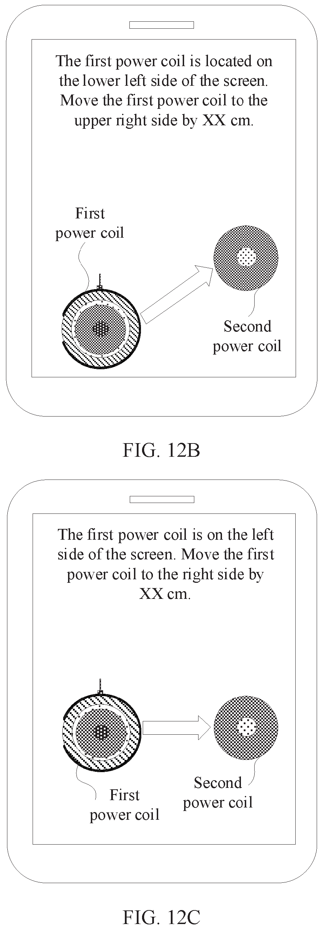

For example, when the position of the first power coil relative to the display screen 20 is detected, the relative position of the first power coil relative to the second power coil may be obtained. The processor 50 generates the prompt information, to remind the user to accurately move the first power coil. In FIG. 12A, it is detected that the first power coil is located on an upper left side of a screen, and the user is reminded to move the first power coil to a lower right side by XX cm. The prompt information includes the relative position of the first power coil relative to the display screen 20, the movement direction of the first power coil, and the movement distance of the first power coil. In FIG. 12B, it is detected that the first power coil is located on a lower left side of the screen, and the user is reminded to move the first power coil to an upper right side by XX cm. In FIG. 12C, it is detected that the first power coil is located on a left side of the screen, and the user is reminded to move the first power coil to a right side by XX cm.

The prompt information may be displayed in a form of a text, or the prompt information may be displayed in a form of a pattern. The accompanying drawings in this embodiment of this application are merely an example, and do not constitute any limitation.

An embodiment of this application further provides a display screen control method. The method may be applied to the electronic device 1. The display screen control method includes:

When a wireless power transfer device approaches a display screen 20, a touch sensor TS receives a transmit signal of a first power coil of the wireless power transfer device, and outputs a feedback signal; a touch driver chip TPIC collects a feedback signal output by at least one touch sensor TS, and sends the feedback signal to the processor 50, where the feedback signal indicates a relative position of the first power coil relative to the display screen 20; and the processor 50 adjusts display and/or touch of the display screen 20 in response to the feedback signal.

In some embodiments, the display screen control method includes: in response to the feedback signal, determining that the feedback signal is a charging interference signal or a touch signal, and outputting a control signal based on a determining result, to adjust display or touch of the display screen 13.

For example, adjusting display of the display screen 13 includes: adjusting a display status of the display screen 13.

Alternatively, for example, adjusting display of the display screen 13 includes: adjusting a display image of the display screen 13.

For a manner of adjusting the display status and the display image of the display screen 13, refer to the foregoing related descriptions. Details are not described herein again.

An embodiment of this application further provides an electronic device, including a memory and a processor 50. The memory stores a computer program, and the processor 50 executes the computer program, so that the electronic device 1 implements the display screen control method when executing the computer program.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic device, wherein the electronic device comprises a display screen and a processor;
the display screen comprises a touch driver chip and a plurality of spaced touch sensors; and when a wireless power transfer device approaches the display screen, the touch sensor is configured to: receive a transmit signal of a first power coil of the wireless power transfer device, and output a feedback signal;
the touch driver chip is configured to: collect the feedback signal output by at least one touch sensor, and send the feedback signal to the processor, wherein the feedback signal indicates a relative position of the first power coil relative to the display screen; and
the processor adjusts display and/or touch of the display screen in response to the feedback signal.

2. The electronic device according to claim 1, wherein the adjusting display of the display screen comprises: adjusting a display status of the display screen.

3. The electronic device according to claim 2, wherein the electronic device further comprises a display driver integrated circuit, and the display driver integrated circuit is coupled to the processor; and
the adjusting the display status of the display screen comprises: controlling the display driver integrated circuit to increase display luminance of the display screen.

4. The electronic device according to claim 2, wherein the electronic device further comprises a display driver integrated circuit, and the display driver integrated circuit is coupled to the processor; and
the adjusting the display status of the display screen comprises: controlling the display driver integrated circuit to drive the display screen to exit an always on display mode or not enter an always on display mode.

5. The electronic device according to claim 2, wherein the electronic device further comprises a display driver integrated circuit, and the display driver integrated circuit is coupled to the processor; and
the adjusting the display status of the display screen comprises: controlling duration of a data write signal output by the display driver integrated circuit to the display screen to be greater than a specified value.

6. The electronic device according to claim 2, wherein the electronic device further comprises a display driver integrated circuit, and the display driver integrated circuit is coupled to the processor; and
the adjusting the display status of the display screen comprises: controlling a time period in which the display driver integrated circuit outputs a data write signal to the display screen to not intersect with a time period in which the first power coil transmits a signal.

7. The electronic device according to any one of claims 2 to 6, wherein that the processor adjusts display of the display screen in response to the feedback signal comprises: the processor adjusts the display status of the display screen when the relative position indicates that the first power coil is located within a specified distance on a light-emitting side of the display screen.

8. The electronic device according to claim 1, wherein adjusting display of the display screen comprises: adjusting a display image of the display screen.

9. The electronic device according to claim 8, wherein adjusting the display image of the display screen comprises:
generating prompt information, wherein the prompt information comprises one or more of the relative position of the first power coil relative to the display screen, a relative position of the first power coil relative to a second power coil of the electronic device, a movement direction of the first power coil, a movement distance of the first power coil, a movement direction of the electronic device, a movement distance of the electronic device, a position of the second power coil, and removal of an interfering object; and
the display screen is configured to display the prompt information.

10. The electronic device according to any one of claims 1 to 9, wherein that the processor responds to the feedback signal comprises: the processor determines that the feedback signal is a charging interference signal or a touch signal.

11. The electronic device according to claim 10, wherein the processor determines that the feedback signal is a charging interference signal, and does not output a touch control signal.

12. The electronic device according to claim 10, wherein the processor determines that the feedback signal is a touch signal, and outputs a touch control signal based on the touch signal.

13. The electronic device according to any one of claims 1 to 12, wherein the processor further obtains, in response to the feedback signal, the time period in which the first power coil transmits a signal, and controls a time period in which the touch driver chip collects the feedback signal to intersect with the time period in which the first power coil transmits a signal.

14. The electronic device according to claim 13, wherein controlling the time period in which the touch driver chip collects the feedback signal to intersect with the time period in which the first power coil transmits a signal comprises: controlling the time period in which the touch driver chip collects the feedback signal to be within the time period in which the first power coil transmits a signal.

15. A display screen control method, applied to an electronic device, wherein the electronic device comprises a display screen and a processor, and the display screen comprises a touch driver chip and a plurality of spaced touch sensors; and
the control method comprises:
when a wireless power transfer device approaches the display screen, receiving, by the touch sensor, a transmit signal of a first power coil of the wireless power transfer device, and outputting a feedback signal;
collecting, by the touch driver chip, the feedback signal output by at least one touch sensor, and sending the feedback signal to the processor, wherein the feedback signal indicates a relative position of the first power coil relative to the display screen; and
adjusting, by the processor, display and/or touch of the display screen in response to the feedback signal.

16. The display screen control method according to claim 15, wherein the adjusting display of the display screen comprises: adjusting a display status of the display screen.

17. The display screen control method according to claim 15, wherein the adjusting display of the display screen comprises: adjusting a display image of the display screen.

18. The display screen control method according to any one of claims 15 to 17, wherein that the processor responds to the feedback signal comprises: the processor determines that the feedback signal is a charging interference signal or a touch signal.

19. An electronic device, comprising a memory and a processor, wherein the memory stores a computer program, and the processor executes the computer program, so that the electronic device performs the display screen control method according to any one of claims 15 to 18.
